Europäisches Patentamt

European Patent Office

Office européen des brevets

(19)

(11) Numéro de publication: **0 434 884 A1**

## (12) DEMANDE DE BREVET EUROPEEN

(21) Numéro de dépôt: 89810991.3

(22) Date de dépôt: 29.12.89

(51) Int. Cl.⁵: **G01C 17/26**

(43) Date de publication de la demande:
**03.07.91 Bulletin 91/27**

(84) Etats contractants désignés:
**CH DE FR GB IT LI**

(71) Demandeur: **DETRA SA**
**35, Rue Scholl**
**CH-2504 Bienne(CH)**

(72) Inventeur: **Tu, Mai Xuan**
**Chiésaz 13**
**CH-1024 Ecublens(CH)**

Inventeur: **Schwab, Michel**
**Rue du Cornouiller 4**
**CH-2502 Bienne(CH)**
Inventeur: **Osseni, Razack**
**Bois de Vaux 9**
**CH-1007 Lausanne(CH)**

(74) Mandataire: **Rochat, Daniel Jean et al**
**Bovard SA Ingénieurs-Conseils ACP**
**Optingenstrasse 16**
**CH-3000 Bern 25(CH)**

(54) Appareil d'indication de direction.

(57) Appareil d'indication de direction comprenant une boussole mécanique, un moteur pas à pas entraînant 2 aiguilles solidaires et un circuit électronique de commande. Une des aiguilles sert à la détection de la direction du nord magnétique; la deuxième aiguille sert à l'affichage de la direction souhaitée.

Figure 1

# APPAREIL D'INDICATION DE DIRECTION.

La présente invention a pour objet un appareil d'indication de direction.

La détermination de la direction d'un endroit à atteindre se fait généralement à l'aide d'une boussole mécanique. Dans ce cas, l'utilisateur doit faire certaines opérations manuelles pour trouver la direction souhaitée. Pour éviter de telles opérations, il existe des instruments de navigation utilisant des boussoles électroniques permettant de déterminer automatiquement la direction d'un endroit à atteindre. Une des réalisations connues de telles boussoles électroniques consiste à utiliser une boussole mécanique portant un disque optique. Des capteurs optiques permettent de détecter la position angulaire du disque optique et par conséquent la direction du nord magnétique terrestre. Un tel instrument est relativement onéreux et encombrant, par conséquent peu pratique pour un usage personnel. La présente invention permet de réaliser un appareil de faibles dimensions, comparables aux dimensions d'une montre de poche, indiquant de façon automatique la direction d'un endroit à atteindre.

L'invention sera mieux comprise à la description qui va suivre en se référant au dessin annexé dans lequel:

- la figure 1 représente un exemple d'exécution de l'appareil selon l'invention,
- la figure 2 représente les détails de la boussole mécanique et l'aiguille de détection,
- la figure 3 représente le schéma bloc du circuit d'électronique de commande.

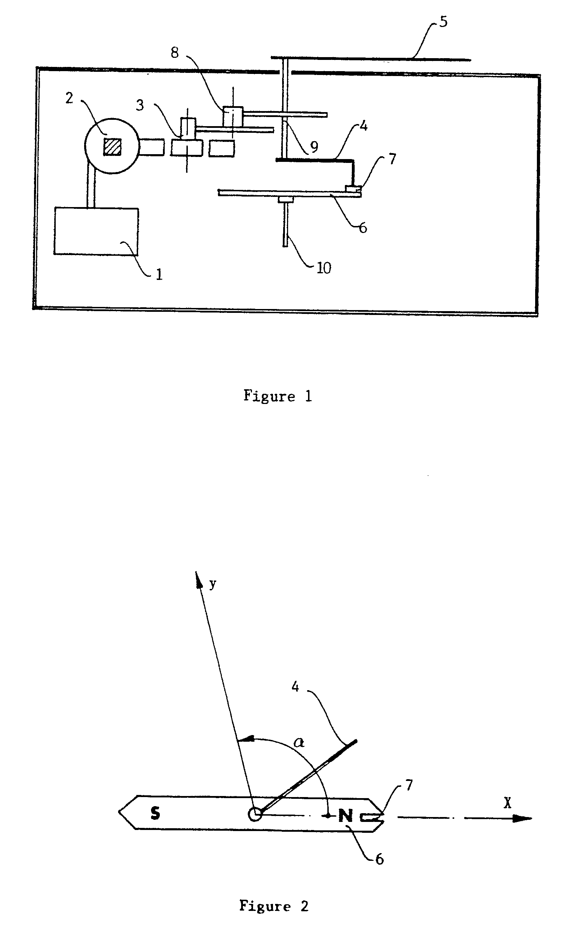

La figure 1 représente un exemple d'exécution de l'appareil selon l'invention. Le circuit électronique de commande 1 est relié à la bobine 2 du moteur pas à pas dont le rotor 3 entraîne à travers le train d'engrenage 8 les aiguilles 4 et 5 fixées sur le même axe 9. L'aiguille 5 se trouvant à l'extérieur du boîtier 11 sert à afficher la direction souhaitée. L'aiguille 4 se trouvant à l'intérieur du boîtier 11 possède une branche coudée permettant de toucher la butée 7 solidaire à la boussole 6. Le rôle de l'aiguille 4 est de repérer la position du nord magnétique terrestre.

La figure 2 permet de mieux comprendre le processus de détection et d'affichage, soit $\alpha$ l'angle formé par l'axe magnétique terrestre X et l'axe y de la direction à afficher. L'aiguille de détection 4 est entraînée dans le sens horaire jusqu'au moment où elle est arrêtée par la butée 7 solidaire à la boussole 6. L'inertie et le couple d'orientation de la boussole sont tels que la position angulaire de l'aiguille 4 est imposée par l'axe X. Pour afficher la direction y, il suffit d'entraîner les aiguilles 4 et 5, puisqu'elles sont solidaires, dans le sens anti-horaire un certain nombre de pas correspondant à l'angle $\alpha$ .

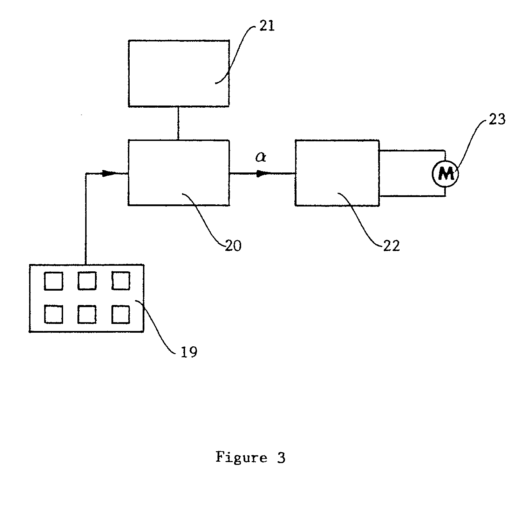

La figure 3 représente le schéma bloc du circuit électronique de commande. L'utilisateur indique à l'appareil l'endroit où il se trouve et l'endroit à atteindre à l'aide du clavier 19. Les informations fournies sont traitées par le microprocesseur 20 en les comparant avec les données contenues dans une mémoire préprogrammée 21 pour trouver l'angle $\alpha$ entre l'axe magnétique terrestre et l'axe y de la direction souhaitée. Le microprocesseur commande ensuite à travers l'étage de puissance 22 le moteur pas à pas 23 selon le processus décrit plus haut.

## Revendications

1. Appareil d'indication de direction comprenant des moyens de détection du nord magnétique terrestre, des moyens pour déterminer l'angle $\alpha$ formé par l'axe magnétique terrestre avec l'axe passant par l'endroit où se trouve l'appareil et l'endroit à atteindre et des moyens d'affichage caractérisé en ce que lesdits moyens de détection du nord magnétique terrestre sont constitués par une boussole mécanique, un moteur pas à pas entraînant une aiguille dont l'axe de rotation est séparé, mais coaxial avec celle de la boussole, en ce que lesdits moyens pour déterminer l'angle $\alpha$ sont constitués par une mémoire électronique préprogrammée et en ce que lesdits moyens d'affichage sont constitués par le même moteur pas à pas utilisé dans les moyens de détection du champ magnétique entraînant une seconde aiguille.

Figure 1

Figure 2

Figure 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 195 180  (FLOYD) <br> * Figure 1; abrégé * <br> --- | 1 | G 01 C  17/26 |
| A | FR-A-2 287 681  (ETAT FRANCAIS) <br> * Figures 1,2; revendication 1 * <br> ----- | 1 | |

DOMAINES TECHNIQUES
RECHERCHES (Int. Cl.5)

G 01 C

Le présent rapport a été établi pour toutes les revendications

| Lieu de la recherche | Date d'achèvement de la recherche | Examinateur |
|---|---|---|
| LA HAYE | 30-08-1990 | KOLBE W.H. |